# EUROPEAN PATENT APPLICATION

(11) **EP 3 878 623 A1**
(43) Date of publication of application: **15.09.2021**
(21) Application number: 21161569.5
(22) Date of filing: 09.03.2021
(51) Int. Cl.: B29C 45/26, F16H 55/08, F16H 55/22

(54) **RESIN MOLDING MOLD**

(30) Priority: 10.03.2020 JP 2020040706; 07.08.2020 JP 2020135258
(71) Applicant: JTEKT CORPORATION, Chuo-ku, Osaka-shi, Osaka 542-8502 (JP)
(72) Inventor: KIKUCHI, Arata, Osaka-shi,, Osaka 542-8502 (JP); TORII, Mayu, Osaka-shi,, Osaka 542-8502 (JP)
(74) Representative: Winter, Brandl - Partnerschaft mbB

(57) **Abstract**

A resin molding mold (100), by which a resin worm wheel (220) for a worm speed reducer (200) is molded, includes a plurality of tooth forming portions (110) provided such that the tooth forming portions (110) are disposed at predetermined intervals on a circumference of the resin molding mold. The tooth forming portions (110) each include a projection portion (140) provided in a part of a tooth-flank forming surface (130) by which a tooth flank is formed.

## Description

### BACKGROUND OF THE INVENTION

### 1. Field of the Invention

The present invention relates to a resin molding mold by which a resin worm wheel is formed.

### 2. Description of Related Art

In related art, for improvement in silentness and lubricity, weight reduction, and so on, a worm speed reducer including a resin worm wheel has been used.

Japanese Unexamined Patent Application Publication No. 2013-53666 (JP 2013-53666 A) describes a technology to increase silentness by forming a recessed portion in a part of a tooth flank of a resin worm wheel so as to restrain gear rattle noise caused due to backlash, the part of the tooth flank making contact with a metal wormshaft.

### SUMMARY OF THE INVENTION

However, to form the recessed portion on the tooth flank of the worm wheel, it is necessary to perform a conforming step (adapting step) of forming the recessed portion on the tooth flank by rotationally driving the resin worm wheel in a state where the resin worm wheel is engaged with the metal wormshaft.

The present invention provides a resin molding mold that makes it possible to omit a conforming step for forming a recessed portion.

One aspect of the present invention relates to a resin molding mold by which a resin worm wheel for a worm speed reducer is molded. The resin molding mold includes a plurality of tooth forming portions provided such that the tooth forming portions are disposed at predetermined intervals on a circumference of the resin molding mold. The tooth forming portions each include a projection portion provided in a part of a tooth-flank forming surface by which a tooth flank is formed.

The worm speed reducer including the resin worm wheel manufactured by use of the resin molding mold according to the above aspect can reduce gear rattle noise caused by backlash, without a conforming step.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view illustrating the inside of a worm speed reducer including a worm wheel to be molded according to Embodiment 1;
FIG. 2 is a perspective view illustrating a resin molding mold according to Embodiment 1 in a simplified manner;
FIG. 3 is a view illustrating one tooth forming portion in an exploded manner, the tooth forming portion facing radially outwardly from the inside of the resin molding mold according to Embodiment 1;
FIG. 4 is a perspective view illustrating a worm wheel to be molded according to Embodiment 1;
FIG. 5 is a view illustrating one tooth forming portion in an exploded manner, the tooth forming portion facing radially outwardly from the inside of a resin molding mold according to Embodiment 2; and
FIG. 6 is a perspective view illustrating a worm wheel to be molded according to Embodiment 2.

### DETAILED DESCRIPTION OF EMBODIMENTS

A resin molding mold according to the present invention will be described with reference to the drawings. Note that values, shapes, materials, constituents, positional relationships between constituents, connecting states, steps, a sequential order of steps, and so on shown in the following embodiments are just examples and are not intended to limit the present invention. Further, the drawings are schematic drawings in which emphasis, omission, adjustment in ratio are performed as appropriate to describe the present invention and may be different from actual shapes, positional relationships, and ratios.

### Embodiment 1

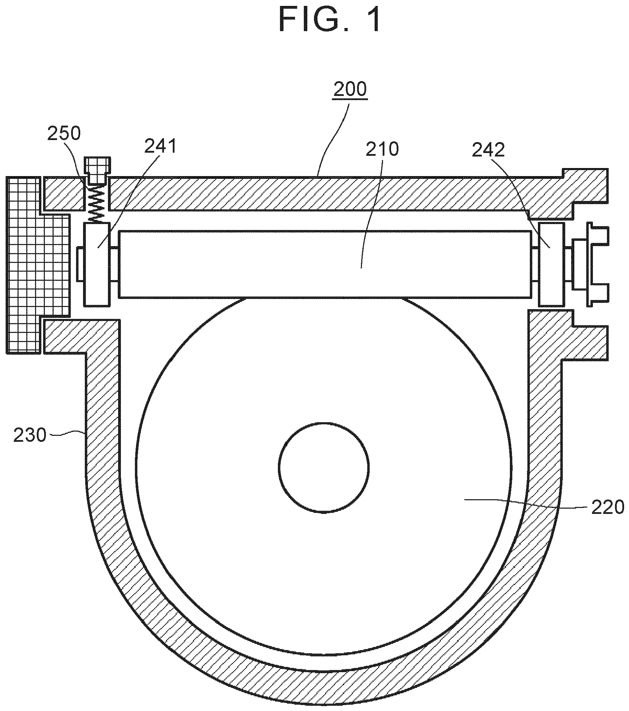

FIG. 1 is a view illustrating the inside of a worm speed reducer 200 including a resin worm wheel 220. As illustrated in the figure, the worm speed reducer 200 includes a wormshaft 210 into which a torque is input, the worm wheel 220, a housing 230, a first bearing 241, and a second bearing 242. Further, the worm speed reducer 200 includes a biasing member 250 configured to incline the wormshaft 210 such that the wormshaft 210 is pressed against the worm wheel 220 so as to restrain backlash.

The housing 230 is a structural member in which the wormshaft 210 and the worm wheel 220 are accommodated.

The wormshaft 210 is made of metal and is held by the first bearing 241 and the second bearing 242 such that the wormshaft 210 is rotatable relative to the housing 230. Further, the wormshaft 210 is held tiltably around the second bearing 242 and is pressed against the worm wheel 220 via the first bearing 241 by biasing force from the biasing member 250. Thus, backlash is restrained.

The worm wheel 220 is made of resin and is held to be rotatable relative to the housing 230. The worm wheel 220 decelerates and outputs the rotation of the wormshaft 210. For example, the worm wheel 220 is connected to a steering shaft provided in a steering apparatus. The worm wheel 220 amplifies a torque of an electric motor 300 that is input into the wormshaft 210 and provides an assist torque to the steering shaft.

The first bearing 241 holds a first end part of the wormshaft 210 on a side opposite to an input side inside the housing 230. The first bearing 241 is held so as to be able to reciprocate in a direction (a Z-direction in the figure) directed toward the worm wheel 220 relative to the housing 230. The first bearing 241 can incline the wormshaft 210 relative to the second bearing 242 holding a second end part of the wormshaft 210.

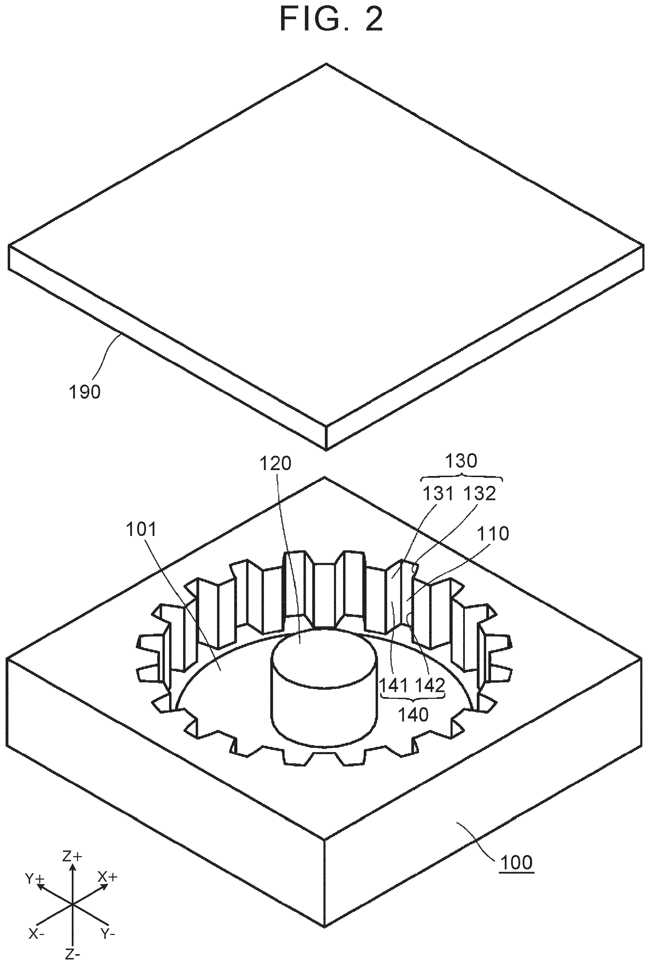

FIG. 2 is a perspective view illustrating a resin molding mold in a simplified manner. The resin molding mold 100 is a so-called molding die by which the resin worm wheel 220 for the worm speed reducer 200 is molded and includes tooth forming portions 110. In a case of Embodiment 1, the resin molding mold 100 is a molding die to be used for manufacture of an injection molding body formed by injection molding by injecting molten resin into a cavity portion 101 formed inside the resin molding mold 100. The resin molding mold 100 includes a flat plate-shaped seal member 190 configured to seal the cavity portion 101. The resin molding mold 100 includes a hole forming portion 120 for forming a through-hole through which a shaft is passed. A manufacturing apparatus for molding the resin worm wheel 220 by use of the resin molding mold 100 is not limited in particular. However, the manufacturing apparatus may be an injection molding apparatus, for example.

The tooth forming portions 110 are parts arranged at regular intervals (equal intervals) on the circumference of the resin molding mold 100 and recessed radially outwardly. The shape of the tooth forming portion 110 corresponds to the shape of a tooth in the worm wheel 220 to be molded. For example, in a case where the worm wheel 220 to be molded includes a tooth having a helical tooth trace with a predetermined helix angle on a reference cylinder, the shape of the tooth forming portion 110 corresponds to the shape of the tooth.

The tooth forming portion 110 includes a tooth-flank forming surface 130 by which a tooth flank of a tooth of the worm wheel 220 is formed (i.e., a tooth-flank forming surface 130 that forms a tooth flank of a tooth of the worm wheel 220 that is molded). The tooth forming portion 110 is a part recessed radially outwardly, and the tooth-flank forming surface 130 includes a pair of forming surfaces, i.e., a first forming surface 131 and a second forming surface 132, such that the first forming surface 131 and the second forming surface 132 face each other in the circumferential direction of the resin molding mold 100. Note that the tooth-flank forming surface 130 may be a twisted curved surface corresponding to the shape of a tooth to be molded.

A projection portion 140 is provided integrally with the tooth-flank forming surface 130. The projection portion 140 projects in the circumferential direction from the tooth-flank forming surface 130. The tooth-flank forming surface 130 includes the first forming surface 131 and the second forming surface 132. The first forming surface 131 is provided with a first projection portion 141, and the second forming surface 132 is provided with a second projection portion 142. Note that the projection amount of the projection portion 140 is very small, and therefore, the projection portion 140 cannot be illustrated in FIG. 2, but its reference sign is illustrated.

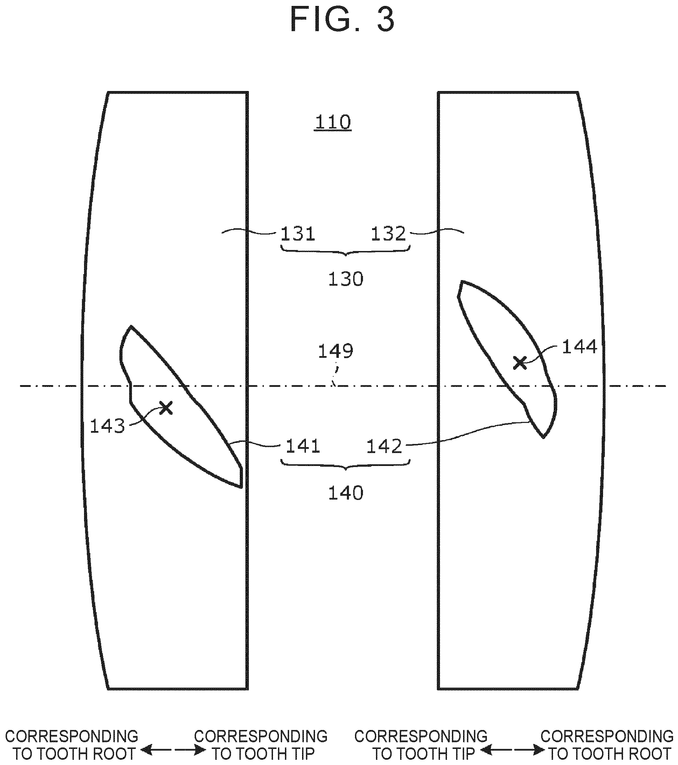

FIG. 3 is a view illustrating one tooth forming portion 110 in an exploded manner, the tooth forming portion 110 facing radially outwardly from the inside of the resin molding mold 100. The projection portion 140 is a part projecting from a smooth surface formed by the whole tooth-flank forming surface 130 and is present in a region as a part of the tooth-flank forming surface 130. Note that, in FIG. 3, a boundary between the projection portion 140 and the smooth surface is schematically illustrated by a continuous line, but the tooth-flank forming surface 130 is smoothly connected to the projection portion 140. The region where the projection portion 140 is provided corresponds to a region where the worm wheel 220 manufactured by the resin molding mold 100 makes contact with the wormshaft 210 at a maximum contact pressure. The maximum projection height of the projection portion 140 from the tooth-flank forming surface 130 as a reference is not limited in particular but is preferably equal to or less than 100 µm.

In the case of Embodiment 1, the worm speed reducer 200 to which the worm wheel 220 manufactured by the resin molding mold 100 is applied is configured to drive the worm wheel 220 both clockwise and counterclockwise. Accordingly, the first projection portion 141 is provided on the first forming surface 131, and the second projection portion 142 is provided on the second forming surface 132. Further, a first maximum projection position 143 and a second maximum projection position 144 that are respective maximum projection positions of the first projection portion 141 and the second projection portion 142 respectively provided on the first forming surface 131 and the second forming surface 132 as the tooth-flank forming surface 130 are set at different positions in the axial direction of the worm wheel 220 to be formed. In the case of Embodiment 1, the first maximum projection position 143 and the second maximum projection position 144 are disposed on the opposite sides to each other across a central plane 149, in the axial direction, of the worm wheel 220 to be formed.

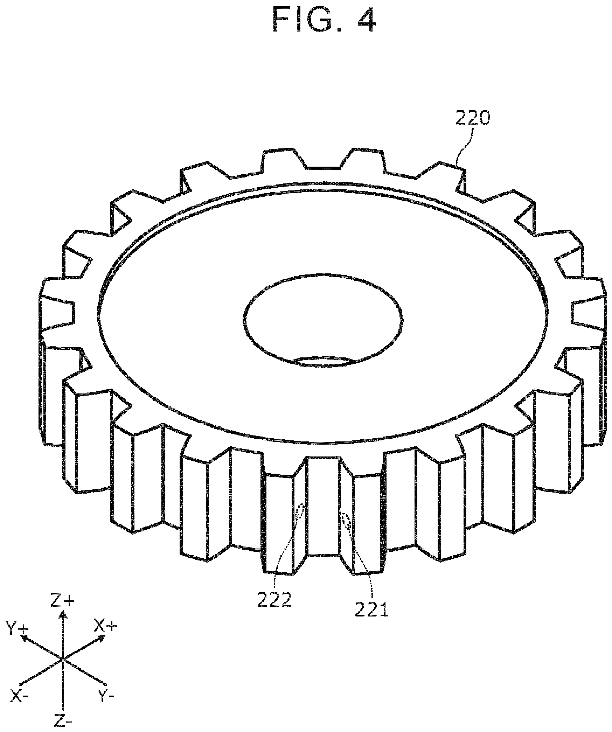

When the worm wheel 220 is formed by injection molding or the like by use of the resin molding mold 100, it is possible to provide a first recessed portion 221 and a second recessed portion 222 on every tooth, as illustrated in FIG. 4. Thus, it is possible to omit a conforming step (adapting step) in which the wormshaft 210 and the worm wheel 220 are driven for a predetermined period of time.

Further, the worm speed reducer 200 including the worm wheel 220 molded by the resin molding mold 100 includes the biasing member 250 configured to press the wormshaft 210 against the worm wheel 220 so as to restrain backlash. In order to form the worm speed reducer 200 configured as described above, the positions of the first projection portion 141 and the second projection portion 142 are set in the resin molding mold 100 in consideration of deviation from an ideal meshing position (designed value) where the wormshaft 210 meshes with the worm wheel 220. Thus, it is possible to achieve appropriate tooth contact between the wormshaft 210 and the worm wheel 220 configured to rotate both clockwise and counterclockwise according to the rotation direction of the wormshaft 210 pressed against the worm wheel 220 by the biasing member 250.

### Embodiment 2

Next, another embodiment of the resin molding mold 100 will be described. Note that the same reference signs are assigned to parts having action and function similar to those in Embodiment 1 and shape, mechanism, and structure similar to those in Embodiment 1, and descriptions of the parts may be omitted. Further, points different from Embodiment 1 will be mainly described below, and descriptions about similar points may be omitted.

The resin molding mold 100 according to Embodiment 2 is similar to that in Embodiment 1 and its outline shape is similar to that of the resin molding mold illustrated in FIG. 2.

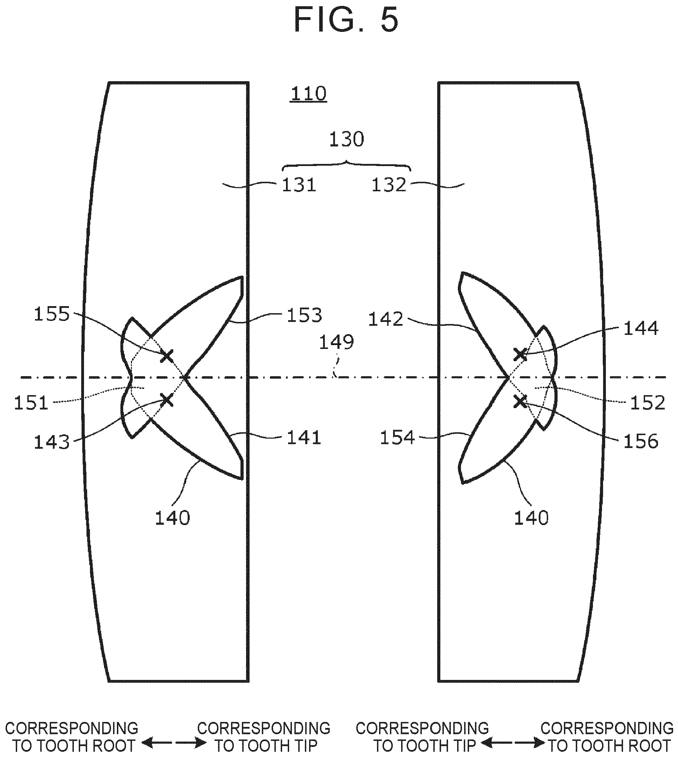

FIG. 5 is a view illustrating one tooth forming portion 110 in an exploded manner, the tooth forming portion 110 facing radially outwardly from the inside of the resin molding mold 100. In a case of Embodiment 2, the projection portion 140 is a part projecting from a smooth surface formed by the whole tooth-flank forming surface 130 and is present in a region as a part of the tooth-flank forming surface 130. Note that a continuous line indicating a boundary is also illustrated in FIG. 5, but the tooth-flank forming surface 130 is smoothly connected to the projection portion 140. A region where the projection portion 140 is provided corresponds to a region where the worm wheel 220 manufactured by the resin molding mold 100 makes contact with the wormshaft 210 with right-hand thread at a maximum contact pressure and also corresponds to a region where the worm wheel 220 manufactured by the resin molding mold 100 makes contact with the wormshaft 210 with left-hand thread at a maximum contact pressure.

In the case of Embodiment 2, the worm speed reducer 200 to which the worm wheel 220 manufactured by the resin molding mold 100 is applied is configured to drive the worm wheel 220 clockwise and counterclockwise by any one of the wormshaft 210 with right-hand thread and the wormshaft 210 with left-hand thread. The first projection portion 141 and a third projection portion 153 are provided on the first forming surface 131, and the second projection portion 142 and a fourth projection portion 154 are provided on the second forming surface 132. The first projection portion 141 and the third projection portion 153 overlap each other in a first common portion 151 (a part surrounded by a broken line on the left side in FIG. 5) so that one projection portion 140 is formed. Similarly, the second projection portion 142 and the fourth projection portion 154 overlap each other in a second common portion 152 (a part surrounded by a broken line on the right side in FIG. 5) so that one projection portion 140 is formed.

Further, the first proj ection portion 141 provided on the first forming surface 131 serving as the tooth-flank forming surface 130 includes the first maximum projection position 143 that is a maximum projection position in the first projection portion 141, and the third projection portion 153 includes a third maximum projection position 155 that is a maximum projection position in the third projection portion 153. That is, the projection portion 140 on the first forming surface 131 includes two peaks, i.e., the first maximum projection position 143 and the third maximum projection position 155 that are arranged in a direction corresponding to a face width. Similarly, the second projection portion 142 provided on the second forming surface 132 includes the second maximum projection position 144 that is a maximum projection position in the second projection portion 142, and the fourth projection portion 154 includes a fourth maximum projection position 156 as a maximum projection position in the fourth projection portion 154. That is, the projection portion 140 on the second forming surface 132 includes two peaks, i.e., the second maximum projection position 144 and the fourth maximum projection position 156, that are arranged in a direction corresponding to a face width.

In the case of Embodiment 2, the first projection portion 141 and the third projection portion 153 are disposed to be symmetrical to each other across the central plane 149, in the axial direction, of the worm wheel 220 to be formed or a plane along the central plane 149. The central plane 149 or the plane along the central plane 149 serves as a reference. The second projection portion 142 and the fourth projection portion 154 are disposed to be symmetrical to each other across the central plane 149, in the axial direction, of the worm wheel 220 to be formed or a plane along the central plane 149. The central plane 149 or the plane along the central plane 149 serves as a reference. The first maximum projection position 143 and the third maximum projection position 155 are disposed on the sides opposite to each other across the central plane 149, in the axial direction, of the worm wheel 220 to be formed. The second maximum projection position 144 and the fourth maximum projection position 156 are disposed on the sides opposite to each other across the central plane 149, in the axial direction, of the worm wheel 220 to be formed.

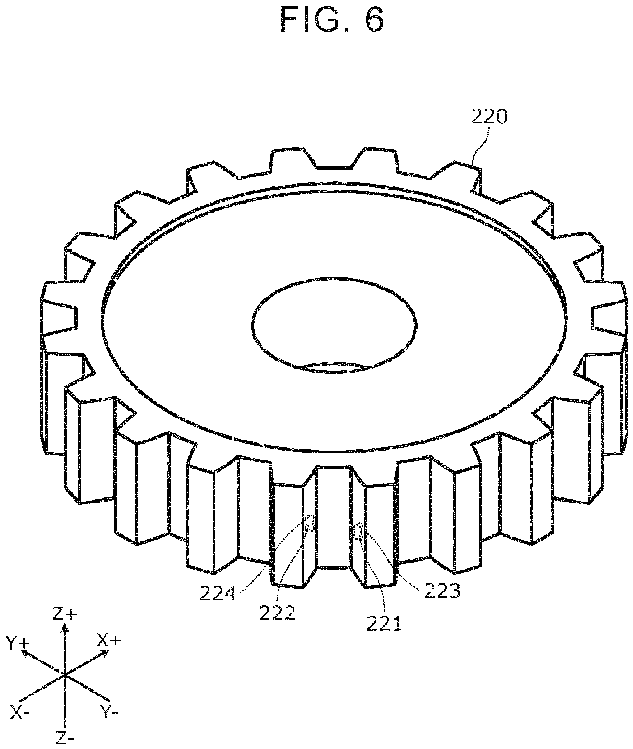

When the worm wheel 220 is formed by injection molding or the like by use of the resin molding mold 100 according to Embodiment 2, it is possible to provide a recessed portion having a shape in which the first recessed portion 221 intersects with a third recessed portion 223 and a recessed portion having a shape in which the second recessed portion 222 intersects with a fourth recessed portion 224 on every tooth, as illustrated in FIG. 6. Thus, it is possible to manufacture the worm wheel 220 corresponding to both the wormshaft 210 with right-hand thread and the wormshaft 210 with left-hand thread. Accordingly, in each of a case where the wormshaft 210 with right-hand thread is used and a case where the wormshaft 210 with left-hand thread is used, it is possible to omit a conforming step (adapting step) in which the worm wheel 220 is driven for a predetermined period of time.

Note that the present invention is not limited to the above embodiments. For example, another embodiment achieved by optionally combining constituents described herein or excluding some of the constituents may be taken as an embodiment of the present invention. Further, the present invention also includes modifications obtained by making various modifications on the above embodiments, the modifications being conceivable by a person skilled in the art without departing from the scope of the present invention.

For example, the above embodiments deal with a case where the first maximum projection position 143 and the second maximum projection position 144 are provided at different positions in the axial direction (the direction of a flank line). However, the first projection portion 141 and the second projection portion 142 may be set such that the first maximum projection position 143 and the second maximum projection position 144 are provided at different positions in a direction directed from a tooth root to a tooth tip.

Further, FIGS. 1 to 6 illustrate the worm wheel 220 that does not have a helix angle and the resin molding mold 100 corresponding to the worm wheel 220. However, the resin molding mold 100 may correspond to the worm wheel 220 having a predetermined helix angle.

Further, the resin molding mold 100 is not limited to a case where the resin molding mold 100 includes the flat plate-shaped seal member 190. The resin molding mold 100 may be divided at a given part, or a core and the like may be disposed in the resin molding mold 100.

Further, a part projecting inwardly in the projection portion 140 on the first forming surface 131 may not have a sharp distal end and may be rounded. In the worm wheel, a recessed portion that corresponds to the rounded part may not receive a contact pressure from the wormshaft.

The present invention can be applied to molding of a resin worm wheel for a worm speed reducer.

## Claims

1. A resin molding mold by which a resin worm wheel (220) for a worm speed reducer (200) is molded, the resin molding mold **characterized by** comprising
a plurality of tooth forming portions (110) provided such that the tooth forming portions (110) are disposed at predetermined intervals on a circumference of the resin molding mold, wherein the tooth forming portions (110) each include a projection portion (140) provided in a part of a tooth-flank forming surface (130) by which a tooth flank is formed.

2. The resin molding mold according to claim 1, **characterized in that**:
the tooth forming portions (110) each include a first forming surface (131) and a second forming surface (132) that are provided as the tooth-flank forming surface (130), the first forming surface (131) and the second forming surface (132) facing each other;
a first projection portion (141) is provided as the projection portion (140) on the first forming surface (131);
a second projection portion (142) is provided as the projection portion (140) on the second forming surface (132); and
a maximum projection position of the first projection portion (141) on the first forming surface (131) is different from a maximum projection position of the second projection portion (142) on the second forming surface (132).

3. The resin molding mold according to claim 1 or 2, **characterized in that**:
the tooth forming portions (110) each include a first projection portion (141) and a third projection portion (153) that are provided as the projection portion (140) on a first forming surface (131); and
the first projection portion (141) and the third projection portion (153) are disposed to be symmetrical to each other across a central plane (149) of a worm wheel (220) to be formed or a plane along the central plane (149), the central plane (149) or the plane along the central plane (149) serving as a reference.

4. The resin molding mold according to any one of claims 1 to 3, **characterized in that**:
the tooth forming portions (110) each include a second projection portion (142) and a fourth projection portion (154) that are provided as the projection portion (140) on a second forming surface (132); and
the second projection portion (142) and the fourth projection portion (154) are disposed to be symmetrical to each other across a central plane (149) of a worm wheel (220) to be formed or a plane along the central plane (149), the central plane (149) or the plane along the central plane (149) serving as a reference.

5. The resin molding mold according to claim 3 or 4, **characterized in that** the projection portion (140) includes two peaks arranged in a direction corresponding to a face width.
